# FASCICULE DE BREVET EUROPEEN

(11) **EP 4 601 910 B1**
(45) Date de publication et mention de la délivrance du brevet: **16.09.2026**
(21) Numéro de dépôt: 23789875.4
(22) Date de dépôt: 06.10.2023
(51) Int. Cl.: B32B 1/00, B60Q 1/26, B32B 17/10, B60Q 3/208, F21V 8/00

(54) **VITRAGE COMPORTANT UN SYSTEME D'ECLAIRAGE INTERIEUR, SYSTEME D'ECLAIRAGE INTERIEUR ET PROCEDE DE FABRICATION D'UN TEL VITRAGE**
GLASSCHEIBE MIT EINEM INTERNEN BELEUCHTUNGSSYSTEM, INTERNES BELEUCHTUNGSSYSTEM UND VERFAHREN ZUR HERSTELLUNG EINER SOLCHEN GLASSCHEIBE
GLASS PANEL HAVING AN INTERNAL ILLUMINATION SYSTEM, INTERNAL ILLUMINATION SYSTEM AND METHOD FOR MANUFACTURING SUCH A GLASS PANEL

(30) Priorité: 10.10.2022 FR 2210360
(43) Date de publication de la demande: 20.08.2025
(73) Titulaire: Saint-Gobain Sekurit France, 60150 Thourotte (FR)
(72) Inventeur: LAMOUREUX, Laurent, 60150 THOUROTTE (FR)
(74) Mandataire: Saint-Gobain Recherche
(86) Numéro de dépôt international: PCT/EP2023/077684
(87) Numéro de publication internationale: WO 2024/078982

(56) Documents cités:
- EP-B1- 3 245 083
- CN-U- 208 123 991
- CN-U- 211 942 909
- FR-A1- 2 937 711
- US-A1- 2014 268 845
- US-A1- 2017 001 556
- US-B2- 8 192 063

## Description

L'invention concerne le domaine des vitrages de véhicule, notamment de véhicule automobile, et concerne en particulier un vitrage pour toit de véhicule. L'invention concerne plus précisément un vitrage comprenant un élément vitré bombé, c'est-à-dire non plat, et un système d'éclairage intérieur.

La présente invention concerne un vitrage, notamment pour toit de véhicule automobile, avec un élément vitré bombé pouvant être illuminé dans sa masse.

L'art antérieur connaît les documents US 2014/268845, US 2007/001556, CN 208123991 et US 8,192,063.

L'invention concerne plus précisément un vitrage comprenant un élément vitré, bombé, réalisant une séparation entre un espace extérieur et un espace intérieur et présentant une face extérieure orientée vers ledit espace extérieur, une face intérieure orientée vers ledit espace intérieur et un chant situé entre ces deux faces, ledit vitrage comprenant un système d'éclairage comportant plusieurs sources lumineuses ponctuelles, de type DEL, et s'étendant le long d'au moins un bord de ladite vitre, et de préférence le long de deux bords opposés de ladite vitre, en étant situé(s) plus à l'intérieur que ladite face intérieure de l'élément vitré.

Dans un tel vitrage, un système prismatique est souvent intercalé entre les sources lumineuses ponctuelles et l'élément vitré ou une partie de l'élément vitré (évidement sur une partie de l'épaisseur de l'élément vitré). Dans un tel vitrage, il est important que le positionnement selon la direction intérieur-extérieur des sources lumineuses ponctuelles suive avec une tolérance acceptable (par exemple plus ou moins 2,0 mm, voire moins) la forme (le bombage) de l'élément vitré, sans être en contact direct avec cet élément vitré, afin de réaliser un éclairage uniforme au travers de l'élément vitré.

Toutefois, lorsque l'élément vitré est bombé, ce bombage n'est pas uniforme dans le sens où il est constitué d'une pluralité de rayons de courbure, à différents endroits de l'élément vitré, et en particulier le long du ou des bords qui accueille(nt) le (ou les) système(s) d'éclairage. Il est alors difficile de maîtriser la distance entre les sources lumineuses ponctuelles et l'élément vitré car il faudrait que les sources lumineuses ponctuelles soient disposées sur un support qui suive lui aussi précisément les courbes du bombage de long de ce (ou ces) bord(s).

En outre, le bombage présente une tolérance de fabrication assez grande et la réalisation d'un support de sources lumineuses ponctuelles bombé présente aussi une tolérance de fabrication ; la combinaison de ces deux tolérances complexifie la maîtrise de la distance entre les sources lumineuses ponctuelles et l'élément vitré pour rester dans la tolérance requise.

La présente invention repose sur la découverte que, d'une manière surprenante, il est possible de réaliser un vitrage avec un élément vitré bombé et des sources lumineuses ponctuelles qui ne sont pas toutes situées exactement à la même distance de l'élément vitré (en appliquant par exemple une tolérance au dixième de millimètre) mais qui sont toutes situées à une distance acceptable de l'élément vitré (en appliquant par exemple une tolérance de plus ou moins 2,0 mm), en utilisant plusieurs supports de sources lumineuses ponctuelles, ou modules lumineux, et en prévoyant au moins un support d'orientation intermédiaire qui permette à la fois d'attacher des modules lumineux à l'élément vitré et à la fois de modifier l'orientation des extrémités de deux modules lumineux adjacents par rapport à l'élément vitré au moment de cet attachement.

Ainsi, il n'est plus nécessaire de prévoir une courbure particulière des modules lumineux ; il est possible d'utiliser des modules lumineux rectilignes (c'est-à-dire non courbés selon leur longueur) ; le support d'orientation va permettre d'appliquer, au moment de l'attachement d'un module lumineux au support, une orientation particulière au module lumineux suivant sa longueur qui va être différente de l'orientation suivant sa longueur du module lumineux adjacent attaché au même support d'orientation, afin de lui permettre de suivre la courbure de l'élément vitré.

Cette adaptation de l'orientation du module lumineux par rapport à l'élément vitré est suffisante pour permettre d'adapter le système d'éclairage à la courbure de l'élément vitré et obtenir que les sources lumineuses ponctuelles du module soient toutes à la même distance de la face intérieure de l'élément vitré, avec une tolérance satisfaisante.

L'invention se rapporte ainsi, dans son acceptation la plus large, à un vitrage selon la revendication 1.

Au sens de la présente invention, une fixation est une liaison chimique entre au moins deux éléments et l'attachement est une liaison purement mécanique entre au moins deux éléments ; l'attachement, comme par exemple le clippage ou le vissage, peut être inversé par une opération de détachement et cette opération n'influence pas l'intégrité des éléments détachés alors que la fixation, comme par exemple le collage, ne peut pas être inversée sans modifier l'intégrité des éléments fixés ensemble.

Le fait que les modules lumineux sont orientés chacun suivant leur longueur selon une direction longitudinale signifie qu'ils sont chacun orientés suivant leur longueur selon une seule direction longitudinale ; chaque module lumineux est ainsi, de préférence, rectiligne selon ladite direction longitudinale ; dans l'absolu, les modules lumineux peuvent être légèrement courbes selon ladite direction longitudinale.

Selon l'invention, ledit support d'orientation permet d'orienter lesdites deux extrémités longitudinales autour d'un axe de rotation, voire de deux axes de rotation, sensiblement parallèle(s) audit élément vitré (c'est-à-dire que l'axe ou les axes ne sont pas perpendiculaires audit élément vitré) afin de faciliter l'adaptation à la courbure de l'élément vitré. Cet axe ou ces axes de rotation est, ou sont, à la fois sensiblement parallèle(s) audit élément vitré et perpendiculaire(s) à ladite direction longitudinale.

Ainsi, pour compenser une courbure de l'élément vitré là où cela est nécessaire, lesdites direction longitudinale des deux modules lumineux adjacents ne sont pas parallèles.

Le fait que chaque module lumineux présente une extrémité longitudinale en vis-à-vis d'une extrémité longitudinale de l'autre signifie que ces deux extrémités sont globalement en face l'une de l'autre dans l'espace mais peuvent ne pas être strictement en face, dans l'espace, puisque les directions longitudinales des deux modules lumineux adjacents peuvent ne pas être parallèles.

De préférence, ledit support d'orientation comporte une aile s'étendant à partir de ladite base en direction centripète et située sous les deux extrémités longitudinales, plus à l'intérieur (c'est-à-dire plus dans l'espace intérieur) que ces extrémités longitudinales, lesdites extrémités longitudinales étant attachées à ladite aile ; une telle structure facilite l'attachement des extrémités longitudinales au support d'orientation.

De préférence ledit support d'orientation présente une gorge, longitudinale, située plus à l'intérieur que ladite aile, afin de permettre d'accueillir une garniture ; le support d'orientation présente alors une fonction supplémentaire de logement pour une garniture et assure une distance adéquate entre cette garniture, les modules lumineux et l'élément vitré.

De préférence, ledit support d'orientation présente un, ou deux, élément(s) mâle(s) ou un, ou deux, élément(s) femelle(s) creux et lesdites extrémités longitudinales présentent chacune respectivement un élément femelle creux situé autour d'un élément mâle dudit support d'orientation ou un élément mâle entouré d'un élément femelle dudit support d'orientation, pour l'attachement et l'orientation desdits modules lumineux audit support d'orientation ; une coopération mâle-femelle permet de réaliser une retenue compacte tout en offrant un degré de liberté en rotation.

Ledit élément femelle creux présente, de préférence, une section intérieure circulaire ou oblong et ledit élément mâle présente une section extérieure circulaire ; une coopération mâle-femelle oblong permet de réaliser une retenue compacte tout en offrant un degré de liberté en rotation et en translation.

Ledit élément mâle présente, de préférence, une cavité d'accueil pour le blocage de l'attachement ; une telle configuration permet de réaliser un blocage très compact.

Dans une variante, pour un support d'orientation, deux modules lumineux adjacents comportent chacun un cylindre creux les deux cylindres creux présentant chacun un axe et les deux axes étant parallèles.

Dans une variante, pour un autre support d'orientation, deux modules lumineux adjacents comportent chacun un cylindre creux, les deux cylindres creux présentant chacun un axe et les deux axes n'étant pas parallèles.

De préférence, ledit vitrage comporte un, et de préférence encore un seul, support d'orientation à chaque liaison entre deux modules lumineux adjacents. Les supports d'orientation sont ainsi localisés à l'endroit d'une liaison entre deux modules lumineux, voire en outre à une ou au deux extrémité(s) longitudinale(s) d'un système d'éclairage le long d'un bord de l'élément vitré. De préférence, pour économiser de la matière (et aussi pour diminuer le poids), il n'y a pas de matière de support d'orientation entre deux supports d'orientation d'un système d'éclairage.

Ledit vitrage comporte de préférence n, nombre entier, modules lumineux qui sont situés le long d'un bord dudit élément vitré et n+1 supports d'orientation permettent d'attacher et d'orienter ces modules lumineux le long de ce bord ; ainsi, chaque module lumineux d'un système d'éclairage est attaché à ses deux extrémités longitudinales par un support d'orientation unique.

Ladite base du support d'orientation peut être fixée ou attachée directement audit élément vitré.

De préférence, ladite base est fixée ou attachée indirectement audit élément vitré par un élément de liaison, ledit support d'orientation étant, de préférence, en matière plastique et ledit élément de liaison étant, de préférence, en métal ou en alliage métallique.

De préférence, ledit élément de liaison est fixé à un joint profilé qui est fixé audit élément vitré, ou ledit élément de liaison est collé audit élément vitré.

De préférence, dans un système d'éclairage selon l'invention tous les modules lumineux sont identiques ; tous les modules lumineux ont la même longueur, la même largeur, le même nombre de sources lumineuses ponctuelles et les mêmes moyens permettant leur attachement à l'élément de liaison. Ainsi, lors de la fabrication du vitrage, il n'est pas nécessaire de porter une attention particulière à la sélection d'un module lumineux particulier en fonction de son futur positionnement dans le vitrage ; tous les modules lumineux sont identiques et sont interchangeables entre eux.

L'invention se rapporte en outre à un procédé de fabrication d'un vitrage selon l'invention.

Ledit procédé est remarquable en ce que :
- une base d'au moins un support d'orientation est fixée ou attachée audit élément vitré, puis
- au moins deux modules lumineux, longitudinaux, supportant chacun plusieurs sources lumineuses ponctuelles, orientés chacun suivant leur longueur selon une direction longitudinale, sont positionnés adjacents l'un à la suite de l'autre selon leur longueur et chacun avec une extrémité longitudinale en vis-à-vis d'une extrémité longitudinale de l'autre en étant située moins centrifuge que ladite base, puis
- lesdites deux extrémités longitudinales, sont attachées et orientées dans l'espace selon un axe (autour d'un axe) de rotation sensiblement parallèle audit élément vitré et perpendiculaire à ladite direction longitudinale.

Dans une variante préférée, préalablement à la fixation ou à l'attachement de ladite base audit élément vitré, un élément de liaison est fixé à un joint profilé qui est fixé audit élément vitré, de préférence par encapsulation ; ladite base est ensuite fixée ou attachée audit élément vitré par ledit élément de liaison.

Avantageusement, l'invention permet d'orienter plus facilement et d'attacher d'une manière plus fiable les modules lumineux à l'élément vitré. Cette orientation est à la fois par rapport au bombage de l'élément vitré (distance par rapport à la face intérieure de l'élément vitré) et à la fois dans la direction centrifuge-centripète dans le plan de bombage (distance par rapport au chant de l'élément vitré). Cette orientation des modules permet une orientation des sources lumineuses ponctuelles afin que l'éclairage soit, de préférence, en direction de l'élément vitré.

Avantageusement, cet attachement est particulièrement compact à la fois dans la direction intérieure-extérieure pour ne pas engendrer trop d'emprise dans l'espace intérieur et à la fois dans la direction centrifuge-centripète pour ne pas limiter le clair de vue.

Avantageusement en outre, en cas de défaillance d'un module lumineux, il peut être changer sans changer les autres modules lumineux du système d'éclairage, et sans avoir besoin de changer le vitrage.

Le procédé selon l'invention a pour avantage d'être plus facile à mettre en oeuvre que les procédés de fabrication de vitrages à système(s) d'éclairage de l'art antérieur.

On décrira ci-après, à titre d'exemples non limitatifs, plusieurs formes d'exécution de la présente invention, en référence aux figures annexées sur lesquelles :
- [Fig. 1] illustre une vue en perspective, de l'espace intérieur, d'un vitrage selon l'invention ;
- [Fig. 2] représente une vue partielle, en coupe longitudinale centrale, du vitrage de la [Fig. 1] ;
- [Fig. 3] représente une vue schématique en coupe d'un bord d'un vitrage et illustre une illumination dans la masse d'un élément vitré du vitrage ;
- [Fig. 4] représente une vue schématique en coupe d'un bord d'un vitrage selon un premier mode de réalisation de l'invention ; et
- [Fig. 5] représente une vue schématique en coupe d'un bord d'un vitrage selon un deuxième mode de réalisation de l'invention.
- [Fig. 6] représente une vue partielle en perspective, d'un bord d'un vitrage selon un troisième mode de réalisation de l'invention ;

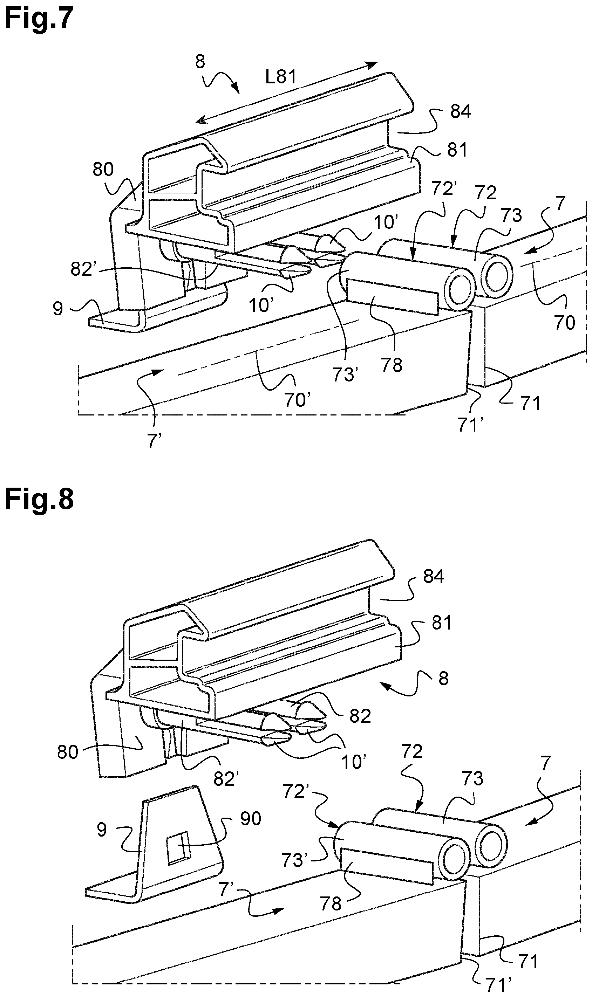

- [Fig. 7] représente une vue partielle éclatée en perspective, de la [Fig. 6] ;
- [Fig. 8] représente une autre vue partielle éclatée en perspective, de la [Fig. 6] ; et
- [Fig. 9] représente une vue schématique en coupe d'un bord d'un vitrage selon le troisième mode de réalisation de l'invention.

La présente invention est décrite à titre d'exemple dans le cadre d'une application comme vitrage 1, fixe, de véhicule. Ce vitrage ferme une baie en réalisant une séparation entre un espace extérieur E, qui est extérieur au véhicule, et un espace intérieur I, qui est intérieur au véhicule. Les notions de « extérieur » et « intérieur » sont donc considérées par rapport, respectivement, à l'espace extérieur et l'espace intérieur.

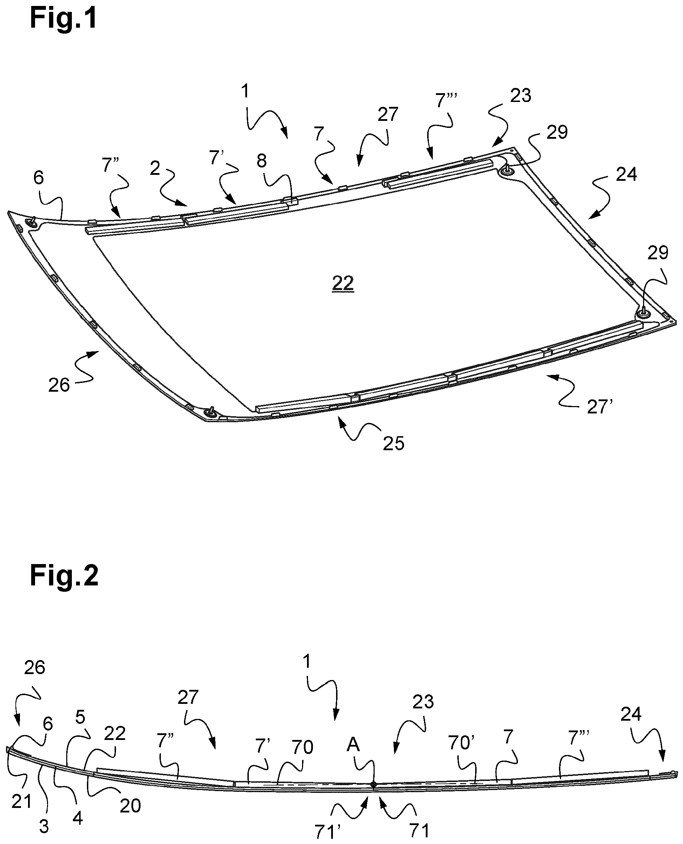

La présente invention est décrite, à titre d'exemple non limitatif, en étant appliquée à un vitrage de toit de véhicule. En référence à la [Fig. 1], le vitrage est vu de l'intérieur, orienté horizontalement, c'est-à-dire retourné sur lui-même par rapport à sa position comme vitrage de toit de véhicule. Dans les figures du présent document le vitrage n'étant pas encore installé dans une baie de carrosserie (elle n'est donc pas visible).

Le vitrage 1 comprend un élément vitré 2. Cet élément vitré peut être monolithique, c'est-à-dire constitué d'une feuille de matière unique, ou être composite, c'est-à-dire constitué de plusieurs feuilles de matière entre lesquelles est insérée au moins une couche intermédiaire de matière adhérente, dans le cas de vitrages feuilletés. La (ou les) feuille(s) de matière peut (ou peuvent) être minérale(s), notamment en verre, ayant par exemple subi un recuit ou une trempe, ou organique(s), notamment en matière plastique telle que le polyvinylbutyral. La couche intermédiaire contient de préférence au moins une matière plastique thermoplastique, de préférence du polyvinylbutyral (PVB), de l'éthylènevinylacétate (EVA), et/ou du polyéthylène téréphtalate (PET). Toutefois, la couche intermédiaire thermoplastique peut également contenir, par exemple, du polyuréthane (PU), du polypropylène (PP), du polyacrylate, du polyéthylène (PE), du polycarbonate (PC), du polyméthacrylate de méthyle, du chlorure de polyvinyle, de la résine de polyacétate, des résines de coulée, des acrylates, de l'éthylène-propylène fluoré, du fluorure de polyvinyle et/ou de l'éthylène-tétrafluoroéthylène, ou des copolymères ou des mélanges de ceux-ci. La couche intermédiaire thermoplastique peut être formée d'un ou de plusieurs films thermoplastiques superposés, l'épaisseur d'un film thermoplastique ne dépassant pas, de préférence, 1,0 mm, notamment de 0,25 mm ou 0,5 mm à 1,0 mm ou 0,9 mm, typiquement autour de 0,4 mm ou 0,7 mm.

Le vitrage peut former une fenêtre latérale de véhicule. Le véhicule peut être un véhicule routier terrestre, tel qu'une voiture, un camion, un bus, un tramway, un véhicule ferroviaire. Il peut s'agir d'un vitrage fixe (non mobile dans le référentiel du véhicule).

Ici, le vitrage est de préférence positionné horizontalement ou essentiellement horizontalement dans le référentiel du véhicule.

Dans le cadre du présent document, la notion de « centripète » et celle de « centrifuge » est à considérer par rapport à l'axe longitudinal central d'avancé du véhicule équipé du vitrage selon l'invention en tant que vitrage de toit allongé, c'est-à-dire avec la longueur du vitrage orientée selon l'axe d'avancé, généralement appelé « l'axe X-X' », du véhicule, ; le sens centripète est en direction de cet axe alors que le sens centrifuge est à l'opposé de cet axe.

Dans l'exemple de réalisation illustré, le vitrage 1 comporte un élément vitré 2 qui est bombé (c'est-à-dire non plat) et feuilleté. Toutefois l'élément vitré 2 pourrait être monolithique.

L'élément vitré 2 présente une face extérieure 20 qui est orientée vers l'extérieur E, une face intérieure 22 qui est orientée vers l'intérieur I et un chant 21 situé entre ces deux faces.

L'élément vitré 2 présente un bord longitudinal 23, gauche, un bord latéral 24, arrière, un bord longitudinal 25, droit et un bord latéral 26, avant.

L'élément vitré 2 présente quatre coins comportant des systèmes de positionnement et attache 29, pour positionner et attacher le vitrage à la baie du véhicule.

Le vitrage 1 peut comprendre un joint profilé 6, qui est ici périphérique ; il s'étend le long des quatre bords de l'élément vitré.

L'élément vitré 2 est un élément vitré feuilleté qui comprend, comme visible sur la vue en coupe verticale de la [Fig. 2], une feuille de verre extérieure 3, une feuille de verre intérieure 5 et une feuille intercalaire de matière plastique 4 située entre lesdites deux feuilles de verre.

Toutefois, il est possible qu'au moins une autre feuille soit intercalée entre la feuille de verre extérieure 3 et la feuille intercalaire de matière plastique 4 ou entre la feuille intercalaire de matière plastique 4 et la feuille de verre intérieure 5.

Le vitrage 1 comporte, outre l'élément vitré 2, au moins un système d'éclairage 27, 27' et ici de préférence deux systèmes d'éclairage 27, 27', comportant chacun plusieurs sources lumineuses ponctuelles de type DEL. Le système d'éclairage 27 s'étend le long du bord 23, longitudinal gauche de l'élément vitré 2, et le système d'éclairage 27' s'étend le long du bord 25, longitudinal droit de l'élément vitré 2.

Chaque système d'éclairage 27, 27' est situé plus à l'intérieur que la face intérieure 22 de l'élément vitré 2 et constitue de ce fait un système d'éclairage intérieur en étant orienté en direction de la face intérieure 22 de l'élément vitré 2. L'alimentation électrique de ces modules n'est pas détaillée ici.

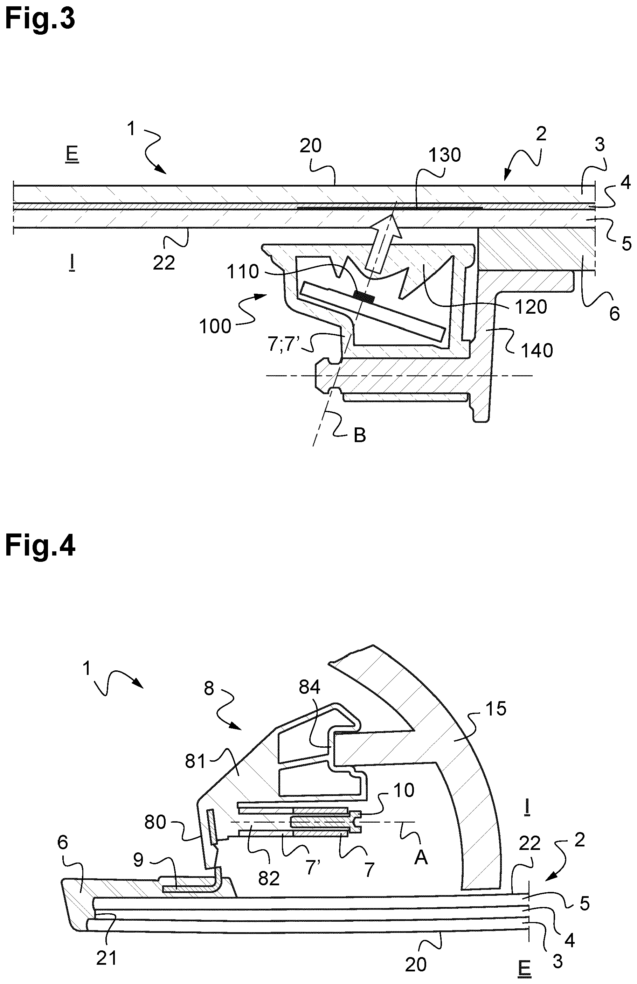

Un système prismatique 100, est illustré à titre d'exemple en [Fig. 3]. Il peut être intercalé entre les sources lumineuses ponctuelles 110 et la face extérieure 20 de l'élément vitré 2 ; il peut comporter une lentille 110 et avoir une partie (film prismatique 130) qui s'insère dans un évidement de l'élément vitré, en particulier dans un évidement de la feuille de verre intérieure 5, voire un évidement de la feuille intercalaire de matière plastique 4. Sur cette [Fig. 3], la direction de la lumière émise par la source lumineuse ponctuelle 110 est illustrée par la double flèche ; elle est inclinée selon une direction B car la source lumineuse ponctuelle 110 est elle-même disposée sur un support du module lumineux qui est incliné selon cette direction B.

Par ailleurs, le module lumineux est attaché au ciel de toit 140, qui est un élément de garniture.

Selon l'invention, pour un système d'éclairage au moins, et de préférence pour chaque système d'éclairage 27, 27', au moins deux modules lumineux 7, 7', et ici quatre modules lumineux 7, 7', 7", 7"', tous longitudinaux, sont disposée adjacents, orientés chacun suivant leur longueur selon une direction longitudinale. Chaque modules lumineux 7, 7' comporte plusieurs sources lumineuses ponctuelles 110. Il peut y avoir par exemple dix DEL (« LED » en anglais) par module lumineux.

Chaque module lumineux est rectiligne, droit ; il présente ainsi la forme d'un pavé droit allongé suivant sa longueur ; tous les modules lumineux d'un système d'éclairage sont ici identiques, pour ne pas complexifier l'installation (pour ne pas avoir à référencer les modules par rapport à leurs positions respectives). Toutes les sources lumineuses ponctuelles sont, de préférence, rectilignes à l'intérieur d'un module lumineux rectiligne.

Comme visible plus en détail en [Fig. 2], deux modules lumineux 7, 7', sont disposée adjacents et sont orientés chacun suivant leur longueur selon une direction longitudinale 70, 70' à la suite l'un de l'autre et présentent chacun une extrémité longitudinale 71 en vis-à-vis d'une extrémité longitudinale 71' de l'autre. Bien que les directions longitudinales des autres modules lumineux ne soient pas illustrées sur cette figure, ces autres modules lumineux sont aussi orientés suivant leur longueur selon une direction longitudinale à la suite les uns des autres et présentent chacun une extrémité longitudinale en vis-à-vis d'une extrémité longitudinale de l'autre. Ainsi, tous les modules lumineux d'un système d'éclairage, et de préférence de chaque système d'éclairage, sont disposés les uns à la suite des autres suivant leur longueur pour former une suite modulaire ; seuls les deux modules situés chacun à une extrémité de cette suite modulaire ont une extrémité libre qui n'est pas en vis-à-vis d'une extrémité longitudinale d'un autre module.

Selon l'invention, le vitrage 1 comporte au moins un support d'orientation 8 à la liaison entre deux modules lumineux adjacents (ici les modules lumineux 7, 7', pour simplifier). Ce support d'orientation 8 comporte une base 80 qui est située à côté des deux extrémités longitudinales 71, 71' et plus centrifuge que les deux extrémités longitudinales 71, 71', c'est-à-dire plus près du bord 23 que les extrémités longitudinales 71, 71' ; cette base 80 est ici fixée indirectement à l'élément vitré 2 par un élément de liaison 9 mais pourrait être fixée directement à l'élément vitré 2 (le support d'orientation 8 pourrait être collé directement à l'élément vitré 2).

La [Fig. 2] montre que les modules lumineux adjacents ne sont pas situés en tout point à la même distance de l'élément vitré 2 : il y a des parties de chaque module lumineux qui sont plus proches de l'élément vitré 2 et d'autres parties de ces modules lumineux qui sont plus éloignées de l'élément vitré 2 (de la face intérieure 22 de l'élément vitré 2). Ainsi, les sources lumineuses ponctuelles à l'intérieur des modules lumineux ne sont pas toutes situées exactement à la même distance de l'élément vitré (en appliquant par exemple une tolérance au dixième de millimètre). Toutefois, les sources lumineuses ponctuelles sont toutes situées à une distance acceptable de l'élément vitré, c'est-à-dire de la face intérieure 22 de l'élément vitré 2 (en appliquant par exemple une tolérance de plus ou moins 2,0 mm).

Le support d'orientation 8 attache et oriente dans l'espace les deux extrémités longitudinales 71, 71' de telle sorte que les directions longitudinales 70, 70' de ces deux modules lumineux 7, 7', adjacents, ne sont pas parallèles.

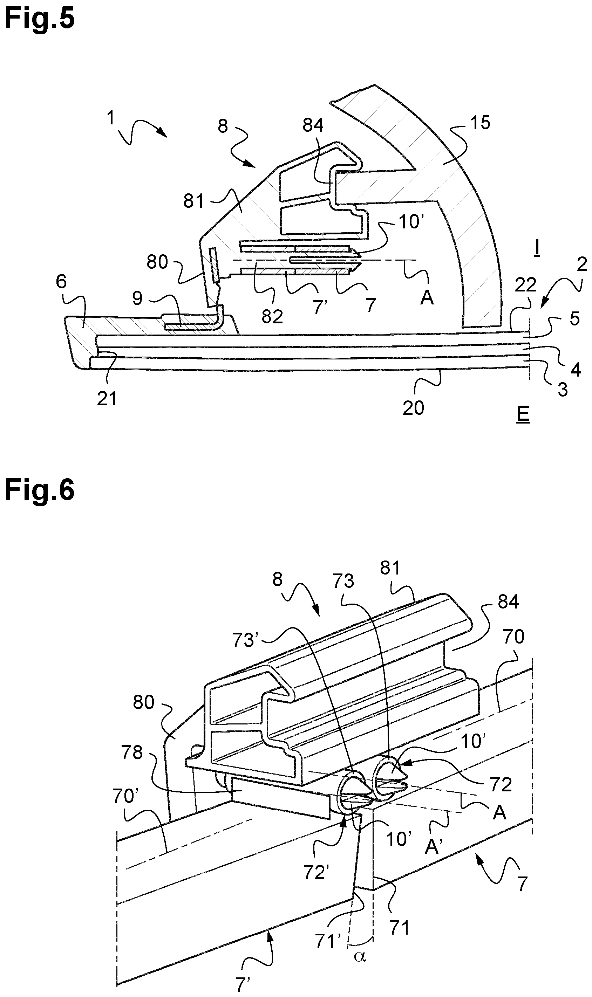

Dans le vitrage 1 de la [Fig. 6] il y a, pour chacun des bord 23, 25 :
- n, nombre entier = 4, modules lumineux 7, 7', 7", 7"' : quatre modules lumineux qui sont situés le long du bord 23 et quatre modules lumineux qui sont situés le long du bord 25 ; et
- n+ 1 = 5 supports d'orientation 8 permettent d'attacher et d'orienter ces modules lumineux : cinq supports d'orientation 8 pour les modules lumineux 7 qui sont situés le long du bord 23 et cinq supports d'orientation 8 pour les modules lumineux 7' qui sont situés le long du bord 25. Tous les supports d'orientation 8 sont de préférence identiques afin de faciliter la fabrication du vitrage (pour ne pas avoir à référencer les supports d'orientation 8 par rapport à leurs positions respectives).

Chaque module lumineux 7, 7' est ainsi, ici, attaché et orienté à ses deux extrémités longitudinales par un support d'orientation 8.

Dans une première variante, illustrée en [Fig. 2] à [Fig. 5], le support d'orientation 8 oriente dans l'espace les deux extrémités longitudinales 71, 71' autour d'un seul axe A de rotation s'étendant transversalement, par rapport à la longueur de l'élément vitré 2.

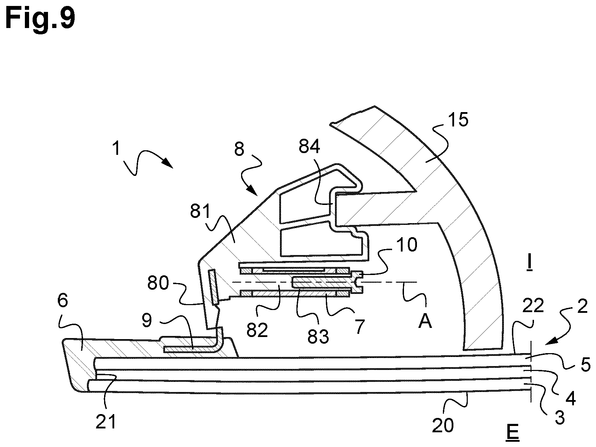

Dans une autre variante détaillée plus loin en référence aux [Fig. 6] à [Fig. 9], le support d'orientation 8 oriente dans l'espace les deux extrémités longitudinales 71, 71' chacune autour d'un axe A, A' de rotation s'étendant transversalement, par rapport à la longueur de l'élément vitré 2.

C'est cette rotation ou ces rotations qui permet(ent) d'orienter les extrémités longitudinales 71, 71' afin que les direction longitudinale 70, 70' des deux modules lumineux adjacents ne soient pas parallèles et pour permettre ainsi de compenser la courbure de l'élément vitré là où cela est nécessaire.

Quelles que soient les variantes, le support d'orientation 8 comporte de préférence une aile 81 qui s'étend à partir de la base 80 en direction centripète et qui est située sous les deux extrémités longitudinales 71, 71', plus à l'intérieur ; lesdites extrémités longitudinales 71, 71' sont ainsi attachées à l'aile 81.

Vue de face, le support d'orientation 8 présente ainsi une forme de T, le tronc du T constituant la base 80 et le reste du T constituant l'aile 81 qui s'étend en direction d'un axe longitudinal central de l'élément vitré. La base 80 s'étend en direction de l'espace intérieur sensiblement à partir de la face intérieure 22 en étant plus centripète que le chant 21. L'aile 81 s'étend longitudinalement en dessous de la face intérieure 22, le long du bord 23 et plus centripète que le chant 21.

La base 80 est étroite et présente une longueur comprise entre 10,0 et 50,0 mm, ici de 21,0 mm. Cette largeur est suffisante pour permettre un bon maintien de l'aile 81.

Ici, le support d'orientation 8 présente en outre une gorge 84, longitudinale, située encore plus à l'intérieur, pour le clippage de la garniture 15 du ciel de toit.

L'aile 81 présente une longueur L81, comprise entre 30,0 et 80,0 mm, ici de 45,0 mm.

Pour attacher et orienter les extrémités longitudinales 71, 71' au support d'orientation 8, ce dernier présente un ou deux, élément(s) mâle(s) 82, 82' ou un, ou deux, élément(s) femelle(s) creux. Les extrémités longitudinales 71, 71' présentent alors chacune une forme complémentaire, respectivement un élément femelle creux 72, 72' situé autour d'un élément mâle du support d'orientation 8 ou un élément mâle entouré d'un élément femelle du support d'orientation 8.

Pour offrir un degré de liberté supplémentaire et permettre non seulement une rotation mais aussi une translation d'une extrémité longitudinale par rapport au support d'orientation, il est possible qu'un élément femelle creux présente une section intérieure oblong et que l'élément mâle coopérant avec cet élément femelle creux présente une section extérieure circulaire.

Pour le blocage de l'attachement d'une extrémité longitudinale par rapport au support d'orientation 8, l'élément mâle peut présenter une cavité d'accueil 83 pour accueillir une vis 10 ou un clip 10'.

Dans un premier mode de réalisation de l'invention, illustré en coupe transversale en [Fig. 4], le support d'orientation 8 présente un élément mâle 82 unique et les extrémités longitudinales 71, 71' adjacentes comportent chacun un cylindre creux 73, 73', ou plutôt chacun un demi-cylindre, ces deux demi-cylindres se complétant sur leur longueur pour correspondre sensiblement à la longueur de l'élément mâle 82. Ces deux cylindres creux 73, 73' présentent chacun un axe A et les deux axes sont parallèles, l'un à la suite de l'autre. Cet axe A est aussi l'axe de l'élément mâle 82. Une vis 10, vissée au cœur de l'élément mâle 82 permet de bloquer l'attachement des extrémités longitudinales 71, 71' adjacentes par rapport au support d'orientation 8.

Dans un deuxième mode de réalisation de l'invention, illustré en coupe transversale en [Fig. 5], la coopération permettant l'orientation des extrémités longitudinales 71, 71' adjacentes par rapport au support d'orientation 8 est identique ; la seule différence est que le blocage de l'attachement des extrémités longitudinales 71, 71' adjacentes par rapport au support d'orientation 8 est opéré par un clip 10', situé au cœur de l'élément mâle 82.

Dans un troisième mode de réalisation de l'invention, illustré en [Fig. 6] à [Fig. 9], le support d'orientation 8 présente deux éléments mâles 82 qui ne sont ici pas parallèles mais pourrait l'être et les deux extrémités longitudinales 71, 71' adjacentes comportent chacun un cylindre creux 73, 73', chaque cylindre creux étant glissé sur un élément mâle pour l'attachement de chaque extrémité longitudinale. Les deux cylindres creux 73, 73' présentent ainsi chacun un axe A, A' et les deux axes ne sont pas parallèles mais pourrait l'être.

La [Fig. 6] montre en particulier un angle α non nul entre les deux faces adjacentes des deux extrémités longitudinales 71, 71' ; sans la rotation autour des axes A, A', les deux faces adjacentes des deux extrémités longitudinales 71, 71' seraient parallèles (angle entre elles infini ou nul).

Les vues en coupe transversale des [Fig. 4], [Fig. 5] et [Fig. 9] montrent par ailleurs que le vitrage 1 comporte un joint profilé 6 qui est fixé au bord de la face intérieure 22 ainsi qu'au chant 21, sans être en contact avec la face extérieure 20 ; il s'agit ici d'un joint profilé 6 dit « flush » en anglais, c'est-à-dire affleurant avec la face extérieure 20.

L'élément de liaison 9 présente une partie qui est incorporée dans le joint profilé 6 et une partie qui fait saillie en dehors du joint profilé 6. Cette partie qui fait saillie sert ici à attacher, et plus précisément à clipper, la base 80, grâce au trou 90. L'élément de liaison 9 est ainsi fixé indirectement à l'élément vitré 2, par l'intermédiaire du joint profilé 6 qui, lui, est fixé directement à l'élément vitré 2.

Toutefois, l'élément de liaison 9 pourrait être directement collé à l'élément vitré 2.

Le matériau constitutif du joint profilé 6 peut être un matériau polymère tel qu'un thermoplastique (PVC, TPE, ...), un polyuréthane ou encore un caoutchouc synthétique du type EPDM ou toute autre matière plastique souple adéquate.

L'attachement de la base 80 à l'élément de liaison 9 est pratique : cela permet de gérer dans deux étapes distinctes et indépendantes d'abord la liaison de l'élément de liaison 9 à l'élément vitré 2 puis la liaison du support d'orientation 8 à l'élément de liaison 9.

Pour faciliter ces deux intégrations l'élément de liaison 9 est ici en métal ou en alliage métallique. Le support d'orientation 8 est ici en matière plastique afin d'être le plus léger possible.

Pour fixer le joint profilé 6 à l'élément vitré 2, il est possible d'utiliser un joint profilé préfabriqué et de faire adhérer ce joint profilé à l'élément vitré ; Cette adhésion peut être réalisée à l'aide d'une bande d'adhésion formée par une couche de colle ou un ruban adhésif et notamment un ruban adhésif double face.

Toutefois, il est préférable d'utiliser un procédé d'encapsulation : il comporte une étape de moulage du joint profilé 6 dans un dispositif de moulage, entre deux éléments de moulage, un élément de moulage accueillant la face intérieure 22 et un élément de moulage accueillant la face extérieure 20, ces deux éléments de moulage étant refermés l'un sur l'autre pendant l'étape de moulage tout en réalisant entre eux une cavité de moulage qui est remplie de la matière constitutive du joint profilé 6 pendant l'étape de moulage de ce joint.

Le joint profilé 6 est, de préférence, disposé sur toute la périphérie de l'élément vitré 2 mais ce joint profilé 6 pourrait tout à fait être positionné que sur une ou plusieurs partie(s) de l'élément vitré 2.

L'élément vitré 2 est fabriqué avant la fixation du joint profilé 6 à l'élément vitré 2 et avant l'attachement du support d'orientation 8 à l'élément de liaison 9.

Ainsi, le système d'éclairage 27, 27' peut être attaché (indirectement, par l'intermédiaire du, ou des, support(s) d'orientation 8) au vitrage 1 indépendamment de la fabrication de l'élément vitré 2, éventuellement pourvu d'un joint profilé 6 : il est donc possible de prévoir, pour une même série de vitrages, des vitrage comportant un ou plusieurs système(s) d'éclairage et des vitrages sans aucun système d'éclairage ; c'est important pour permettre que la présence d'au moins un système d'éclairage soit optionnel pour le véhicule.

Un système d'éclairage 27, 27' selon l'invention comporte au moins deux modules lumineux 7, 7', longitudinaux, et de préférence le nombre de modules lumineux nécessaires pour un bord complet du vitrage (ici quatre modules lumineux) et chaque module lumineux présente au moins une extrémité longitudinale 71, 71', et de préférence deux extrémités longitudinales, comportant chacune des moyens permettant d'attacher les deux extrémités longitudinales 71, 71' au support d'orientation 8 et d'orienter dans l'espace les deux extrémités longitudinales 71, 71' de deux extrémités longitudinales 71, 71' adjacentes par rapport au support d'orientation 8.

Dans le procédé de fabrication du vitrage 1 selon l'invention :
étape 1- la base 80 d'au moins un support d'orientation 8 est d'abord fixée ou attachée à l'élément vitré 2 (de préférence ici par l'élément de liaison 9), et de préférence toutes les base 80 de tous les supports d'orientation 8 sont d'abord fixées ou attachées à l'élément vitré 2, puis
étape 2- pour chaque support d'orientation 8 : deux modules lumineux 7, 7', longitudinaux, sont orientés chacun suivant leur longueur selon une direction longitudinale 70, 70' et sont positionnés adjacents l'un à la suite de l'autre selon leur longueur et chacun avec une extrémité longitudinale 71 en vis-à-vis d'une extrémité longitudinale 71' de l'autre en étant située moins centrifuge que la base 80 du support d'orientation 8, puis
étape 3- pour chaque support d'orientation 8 : ces deux extrémités longitudinales 71, 71', sont attachées et orientées dans l'espace, orientées selon un axe A, A' de rotation sensiblement parallèle à l'élément vitré 2 et perpendiculaire à ladite direction longitudinale 70, 70'.

Pour l'étape 2 de positionnement, de préférence les deux extrémités longitudinales 71, 71' sont positionnées au-dessus de l'aile 81.

Pour l'étape 3 d'attachement et d'orientation des extrémités longitudinales 71, 71', l'attachement peut se faire avant, en même temps ou après l'orientation dans l'espace, en fonction de la coopération choisie entre les extrémités longitudinales 71, 71' et le support d'orientation.

Pour chaque système d'éclairage 27, 27', il est possible d'opérer la totalité des étapes 2 pour tous les supports d'orientation 8, puis la totalité des étapes 3 ou de mixer un ou des étape(s) 2, puis une ou des étape(s) 3.

De préférence, avant l'étape 1, l'élément de liaison 9 est fixé au joint profilé 6 qui est préalablement fixé à l'élément vitré (2), puis la base 80 est attachée ou fixée à l'élément de liaison 9 ; en alternative, l'élément de liaison 9 est collé à l'élément vitré 2, puis la base 80 est attachée ou fixée à l'élément de liaison 9.

Bien que ce ne soit pas illustré, les modules lumineux sont disposés sous une couche noire, comme par exemple une couche d'émail qui est disposée sur ou dans l'élément vitré, afin de ne pas être visibles depuis l'espace extérieur.

## Revendications

1. Vitrage (1) de véhicule comprenant un élément vitré (2), bombé, réalisant une séparation entre un espace extérieur (E) et un espace intérieur (I) et présentant une face extérieure (20), une face intérieure (22) et un chant (21) situé entre ces deux faces, ledit vitrage (1) comprenant un système d'éclairage (27, 27') comportant plusieurs sources lumineuses ponctuelles de type DEL et s'étendant le long d'au moins un bord (23, 25) dudit élément vitré (2), ledit système d'éclairage étant situé plus à l'intérieur que ladite face intérieure (22) de l'élément vitré (2), ledit système d'éclairage constituant un système d'éclairage intérieur, les sources lumineuses étant orientées en direction de la face intérieure (22) de l'élément vitré (2), **caractérisé en ce que** ledit système d'éclairage (27, 27') comporte :
- au moinsdeux moduleslumineux (7, 7'), longitudinaux, adjacents, supportant chacun plusieurs sources lumineuses ponctuelles, orientés chacun suivant leur longueur selon une direction longitudinale (70, 70') à la suite l'un de l'autre et présentant chacun une extrémité longitudinale (71) en vis-à-vis d'une extrémité longitudinale (71') de l'autre, et **en ce que**
- le vitrage comporte au moins un support d'orientation (8) présentant une base (80) située plus centrifuge que les deux extrémités longitudinales (71, 71') en étant fixée ou attachée audit élément vitré (2), ledit support d'orientation (8) permettant d'attacher et d'orienter dans l'espace lesdites deux extrémités longitudinales (71, 71') autour d'un axe (A, A') de rotation sensiblement parallèle audit élément vitré (2) et perpendiculaire à ladite direction longitudinale (70, 70').

2. Vitrage (1) selon la revendication 1, dans lequel ledit support d'orientation (8) comporte une aile (81) s'étendant à partir de ladite base (80) en direction centripète et située sous les deux extrémités longitudinales (71, 71'), plus à l'intérieur que ces extrémités longitudinales, lesdites extrémités longitudinales (71, 71') étant attachées à ladite aile (81).

3. Vitrage (1) selon la revendication 2, dans lequel ledit support d'orientation (8) présente une gorge (84), longitudinale, située plus à l'intérieur que ladite aile (81).

4. Vitrage (1) selon l'une quelconque des revendications 1 à 3, dans lequel ledit support d'orientation (8) présente un, ou deux, élément(s) mâle(s) (82, 82') ou un, ou deux, élément(s) femelle(s) creux et lesdites extrémités longitudinales (71, 71') présentent chacune respectivement un élément femelle creux (72, 72') situé autour d'un élément mâle dudit support d'orientation (8) ou un élément mâle entouré d'un élément femelle dudit support d'orientation (8), pour l'attachement et l'orientation desdits modules lumineux (7, 7') audit support d'orientation (8).

5. Vitrage (1) selon la revendication 4, dans lequel ledit élément femelle creux présente une section intérieure circulaire ou oblong et ledit élément mâle présente une section extérieure circulaire.

6. Vitrage (1) selon la revendication 4 ou 5, dans lequel ledit élément mâle présente une cavité d'accueil (83) pour le blocage de l'attachement.

7. Vitrage (1) selon l'une quelconque des revendications 1 à 6, dans lequel deux modules lumineux (7, 7') adjacents comportent chacun un cylindre creux (73, 73'), les deux cylindres creux (73, 73') présentant chacun un axe et les deux axes étant parallèles.

8. Vitrage (1) selon l'une quelconque des revendications 1 à 7, dans lequel deux modules lumineux (7, 7') adjacents comportent chacun un cylindre creux (73, 73'), les deux cylindre creux (73, 73') présentant chacun un axe et les deux axes n'étant pas parallèles.

9. Vitrage (1) selon l'une quelconque des revendications 1 à 8, dans lequel n, nombre entier, modules lumineux (7, 7') sont situés le long d'un bord (23, 25) dudit élément vitré (2) et n+1 supports d'orientation (8) permettent d'attacher et d'orienter ces modules lumineux le long de ce bord (23, 25).

10. Vitrage (1) selon l'une quelconque des revendications 1 à 9, dans lequel ladite base (80) est fixée ou attachée audit élément vitré (2) par un élément de liaison (9), ledit support d'orientation (8) étant de préférence en matière plastique et ledit élément de liaison (9) étant de préférence en métal ou en alliage métallique.

11. Vitrage (1) selon la revendication 10, dans lequel ledit élément de liaison (9) est fixé à un joint profilé (6) qui est fixé audit élément vitré (2).

12. Vitrage (1) selon l'une quelconque des revendications 1 à 11, dans lequel le vitrage comprend deux systèmes d'éclairage (27, 27') s'étendant le long de deux bords opposés dudit élément vitré (2).

13. Procédé de fabrication d'un vitrage (1) de véhicule selon l'une quelconque des revendications 1 à 12, ledit procédé étant **caractérisé en ce que** :
- une base (80) d'au moins un support d'orientation (8) est fixée ou attachée audit élément vitré (2), puis
- au moins deux modules lumineux (7, 7'), longitudinaux, supportant chacun plusieurs sources lumineuses ponctuelles, orientés chacun suivant leur longueur selon une direction longitudinale (70, 70'), sont positionnés adjacents l'un à la suite de l'autre selon leur longueur et chacun avec une extrémité longitudinale (71) en vis-à-visd'une extrémité longitudinale (71') de l'autre en étant située moins centrifuge que ladite base (80), puis
- lesdites deux extrémités longitudinales (71, 71'), sont attachées et orientées dans l'espace selon un axe (A, A') de rotation sensiblement parallèle audit élément vitré (2) et perpendiculaire à ladite direction longitudinale (70, 70').

14. Procédé selon la revendication 13, dans lequel, préalablement à la fixation ou à l'attachement de ladite base (80) audit élément vitré (2), un élément de liaison (9) est fixé à un joint profilé (6) qui est fixé audit élément vitré (2).

## Patentansprüche

1. Fahrzeugverglasung (1), umfassend ein gewölbtes verglastes Element (2), das eine Trennung zwischen einem Außenraum (E) und einem Innenraum (I) herstellt und eine Außenfläche (20), eine Innenfläche (22) und eine zwischen diesen beiden Flächen angeordnete Kante (21) aufweist, wobei die Verglasung (1) ein Beleuchtungssystem (27, 27') mit mehreren punktförmigen Lichtquellen vom Typ LED umfasst und sich entlang mindestens eines Randes (23, 25) des verglasten Elements (2) erstreckt, wobei das Beleuchtungssystem weiter innen als die Innenfläche (22) des verglasten Elements (2) angeordnet ist, wobei das Beleuchtungssystem ein Innenbeleuchtungssystem bildet, wobei die Lichtquellen in Richtung der Innenfläche (22) des verglasten Elements (2) ausgerichtet sind, **dadurch gekennzeichnet, dass** das Beleuchtungssystem (27, 27') aufweist:
- mindestens zwei längliche, benachbarte Lichtmodule (7, 7'), die jeweils mehrere punktförmige Lichtquellen halten, jeweils entlang ihrer Länge in einer Längsrichtung (70, 70') hintereinander ausgerichtet sind und jeweils ein Längsende (71) aufweisen, das einem Längsende (71') des anderen gegenüberliegt, **und dadurch, dass**
- die Verglasung mindestens eine Ausrichtungshalterung (8) aufweist, die eine Basis (80) aufweist, die weiter zentrifugal als die beiden Längsenden (71, 71') angeordnet ist, wobei sie an dem verglasten Element (2) befestigt oder angebracht ist, wobei die Ausrichtungshalterung (8) es ermöglicht, die beiden Längsenden (71, 71') im Raum um eine Rotationsachse (A, A') zu befestigen und auszurichten, die im Wesentlichen parallel zu dem verglasten Element (2) und senkrecht zu der Längsrichtung (70, 70') verläuft.

2. Verglasung (1) nach Anspruch 1, wobei die Ausrichtungshalterung (8) einen Flügel (81) aufweist, der sich von der Basis (80) in zentripetaler Richtung erstreckt und unter den beiden Längsenden (71, 71'), weiter innen als diese Längsenden angeordnet ist, wobei die Längsenden (71, 71') an dem Flügel (81) befestigt sind.

3. Verglasung (1) nach Anspruch 2, wobei die Ausrichtungshalterung (8) eine Längsnut (84) aufweist, die weiter innen als der Flügel (81) angeordnet ist.

4. Verglasung (1) nach einem der Ansprüche 1 bis 3, wobei die Ausrichtungshalterung (8) ein oder zwei Steckelement(e) (82, 82') oder ein oder zwei hohle(s) Aufnahmeelement(e) aufweist und die Längsenden (71, 71') jeweils ein hohles Aufnahmeelement (72, 72'), das um ein Steckelement der Ausrichtungshalterung (8) herum angeordnet ist, oder ein Steckelement, das von einem Aufnahmeelement der Ausrichtungshalterung (8) umgeben ist, aufweisen, zur Befestigung und Ausrichtung der Lichtmodule (7, 7') an der Ausrichtungshalterung (8).

5. Verglasung (1) nach Anspruch 4, wobei das hohle Aufnahmeelement einen kreisförmigen oder langgestreckten Innenabschnitt aufweist und das Steckelement einen kreisförmigen Außenabschnitt aufweist.

6. Verglasung (1) nach Anspruch 4 oder 5, wobei das Steckelement einen Aufnahmehohlraum (83) zur Arretierung der Befestigung aufweist.

7. Verglasung (1) nach einem der Ansprüche 1 bis 6, wobei zwei benachbarte Lichtmodule (7, 7') jeweils einen Hohlzylinder (73, 73') aufweisen, wobei die beiden Hohlzylinder (73, 73') jeweils eine Achse aufweisen und die beiden Achsen parallel sind.

8. Verglasung (1) nach einem der Ansprüche 1 bis 7, wobei zwei benachbarte Lichtmodule (7, 7') jeweils einen Hohlzylinder (73, 73') aufweisen, wobei die beiden Hohlzylinder (73, 73') jeweils eine Achse aufweisen und die beiden Achsen nicht parallel sind.

9. Verglasung (1) nach einem der Ansprüche 1 bis 8, wobei n Lichtmodule (7, 7'), wobei n eine ganze Zahl ist, entlang eines Randes (23, 25) des verglasten Elements (2) angeordnet sind und n+1 Ausrichtungshalterungen (8) es ermöglichen, diese Lichtmodule entlang dieses Randes (23, 25) zu befestigen und auszurichten.

10. Verglasung (1) nach einem der Ansprüche 1 bis 9, wobei die Basis (80) an dem verglasten Element (2) durch ein Verbindungselement (9) befestigt oder angebracht ist, wobei die Ausrichtungshalterung (8) vorzugsweise aus Kunststoff besteht und das Verbindungselement (9) vorzugsweise aus Metall oder einer Metalllegierung besteht.

11. Verglasung (1) nach Anspruch 10, wobei das Verbindungselement (9) an einer Profildichtung (6) befestigt ist, die an dem verglasten Element (2) befestigt ist.

12. Verglasung (1) nach einem der Ansprüche 1 bis 11, wobei die Verglasung zwei Beleuchtungssysteme (27, 27') umfasst, die sich entlang zweier gegenüberliegender Ränder des verglasten Elements (2) erstrecken.

13. Verfahren zur Herstellung einer Fahrzeugverglasung (1) nach einem der Ansprüche 1 bis 12, wobei das Verfahren **dadurch gekennzeichnet ist, dass**:
- eine Basis (80) mindestens einer Ausrichtungshalterung (8) an dem verglasten Element (2) befestigt oder angebracht ist, und ferner
- mindestens zwei längliche Lichtmodule (7, 7') jeweils mehrere punktförmige Lichtquellen halten und jeweils entlang ihrer Länge in einer Längsrichtung (70, 70') ausgerichtet sind, entlang ihrer Länge hintereinander benachbart positioniert sind, und zwar jeweils mit einem Längsende (71), das einem Längsende (71') des anderen gegenüberliegt, die weniger zentrifugal als die Basis (80) angeordnet sind, und ferner
- die beiden Längsenden (71, 71'') im Raum entlang einer Rotationsachse (A, A') befestigt und ausgerichtet sind, die im Wesentlichen parallel zu dem verglasten Element (2) und senkrecht zu der Längsrichtung (70, 70') verläuft.

14. Verfahren nach Anspruch 13, wobei vor der Befestigung oder Anbringung der Basis (80) an dem verglasten Element (2) ein Verbindungselement (9) an einer Profildichtung (6) befestigt wird, die an dem verglasten Element (2) befestigt ist.

## Claims

1. A vehicle glazing (1) comprising a curved glazed element (2) providing a separation between an exterior space (E) and an interior space (I) and having an external face (20), an internal face (22) and an edge face (21) situated between these two faces, said glazing (1) comprising a lighting system (27, 27') comprising several point light sources, of the LED type, and extending along at least one edge (23, 25) of said glazed element (2), said lighting system being situated further to the inside than said internal face (22) of the glazed element (2), said lighting system constituting an interior lighting system, the light sources being oriented in the direction of the internal face (22) of the glazed element (2), **characterized in that** the lighting system (27, 27') comprises:
- at least two adjacent longitudinal light modules (7, 7'), each supporting several point light sources, each oriented along its length in a longitudinal direction (70, 70') one after the other and each having a longitudinal end (71) facing a longitudinal end (71') of the other, and **in that**
- the glazing comprises at least one orientation support (8) having a base (80) located more centrifugally than the two longitudinal ends (71, 71') and being fastened or attached to said glazed element (2), said orientation support (8) making it possible to attach and spatially orient said two longitudinal ends (71, 71') about an axis (A, A') of rotation substantially parallel to said glazed element (2) and perpendicular to said longitudinal direction (70, 70').

2. The glazing (1) according to claim 1, wherein said orientation support (8) comprises a flange (81) which extends from said base (80) in a centripetal direction and is located beneath the two longitudinal ends (71, 71'), further inwards than these longitudinal ends, said longitudinal ends (71, 71') thus being attached to said flange (81).

3. The glazing (1) according to claim 2, wherein said orientation support (8) has a longitudinal groove (84) located further inwards than said flange (81).

4. The glazing (1) according to any one of claims 1 to 3, wherein said orientation support (8) has one, or two, male element(s) (82, 82') or one, or two, hollow female element(s) and said longitudinal ends (71, 71') each respectively have a hollow female element (72, 72') located around a male element of said orientation support (8) or a male element surrounded by a female element of said orientation support (8), for attachment and orientation of said light modules (7, 7') to said orientation support (8).

5. The glazing (1) according to claim 4, wherein said hollow female element has a circular or oblong internal cross-section and said male element has a circular external cross-section.

6. The glazing (1) according to claim 4 or 5, wherein said male element has a receiving cavity (83) for locking the attachment.

7. The glazing (1) according to any one of claims 1 to 6, wherein two adjacent light modules (7, 7') each comprise a hollow cylinder (73, 73'), the two hollow cylinders (73, 73') each having an axis and the two axes being parallel.

8. The glazing (1) according to any one of claims 1 to 7, wherein two adjacent light modules (7, 7') each comprise a hollow cylinder (73, 73'), the two hollow cylinders (73, 73') each having an axis and the two axes not being parallel.

9. The glazing (1) according to any one of claims 1 to 8, wherein n, integer, light modules (7, 7') are located along an edge (23, 25) of said glazed element (2) and n+1 orientation supports (8) enable these light modules to be attached and oriented along this edge (23, 25).

10. The glazing (1) according to any one of claims 1 to 9, wherein said base (80) is fastened or attached to said glazed element (2) by a connecting element (9), said orientation support (8) preferably being made of plastic and said connecting element (9) preferably being made of metal or metal alloy.

11. The glazing (1) according to claim 10, wherein said connecting element (9) is fastened to a profiled seal (6) which is fastened to said glazed element (2).

12. The glazing (1) according to any one of claims 1 to 11, wherein the glazing comprises two lighting systems (27, 27') extending along two opposite edges of said glazed element (2).

13. A method of manufacturing a vehicle glazing (1) according to any one of claims 1 to 12, said method being **characterized in that**:
- a base (80) of at least one orientation support (8) is fastened or attached to said glazed element (2), then
- at least two longitudinal light modules (7, 7'), each supporting several point light sources, each oriented along their length in a longitudinal direction (70, 70'), are positioned adjacent to one another along their length and each with one longitudinal end (71) facing a longitudinal end (71') of the other, being located less centrifugally than said base (80), then
- said two longitudinal ends (71, 71') are attached and spatially oriented along an axis (A, A') of rotation substantially parallel to said glazed element (2) and perpendicular to said longitudinal direction (70, 70').

14. The method according to claim 13, wherein, prior to fastening or attaching said base (80) to said glazed element (2), a connecting element (9) is fastened to a profiled seal (6) which is fastened to said glazed element (2).
